# EUROPEAN PATENT APPLICATION

(11) **EP 2 306 132 A2**
(43) Date of publication of application: **06.04.2011**
(21) Application number: 10177496.6
(22) Date of filing: 17.09.2010
(51) Int. Cl.: F28D 15/00

(54) **Systems, methods, and apparatus for cooling a power conversion system**

(30) Priority: 24.09.2009 US 565920
(71) Applicant: General Electric Company, Schenectady, NY 12345 (US)
(72) Inventor: Wagoner, Robert Gregory, Salem, VA 24153 (US)
(74) Representative: Bedford, Grant Richard

(57) **Abstract**

Embodiments of the invention can provide systems, methods, and apparatus for cooling a power conversion system. According to one embodiment, a system (100) comprising a power conversion system (105) having an electrical component (120) with a magnetic core can be provided. The system (100) can include a heat transfer path (130) adjacent to a portion of the electrical component (120) and electrically isolated from the electrical component (120). The system (120) can also include a cooling medium (145). The cooling medium (145) can be used in conjunction with the heat transfer path (130) for transferring heat from the electrical component (120). At least in this way, a system (100) for cooling a power system can be provided that can reduce thermal effects associated with power conversion.

## Description

The invention relates generally to power conversion, and more specifically, to systems, methods, and apparatus for cooling a power conversion system.

Power conversion systems are associated with converting one form of energy to another form of energy, such as the conversion of an unregulated, variable form of electrical energy to a relatively stable, non-variable form of electrical energy. Such power conversion systems can be adapted for use in all types of power generation systems, including conventional power generation systems, nuclear power generation systems, and alternative energy type power generation systems, such as wind powered generators and wind turbines. A wind powered generator and a wind turbine can be adapted to convert kinetic energy into electricity for a load such as the electrical power grid. For example, a wind turbine can include a housing or nacelle adapted with rotating blades and positioned atop a truss or a tubular tower. Inside the tower can be placed one or more power conversion systems for converting the relatively variable energy generated by the wind into a relatively non-variable form of energy, such as electricity for the electrical power grid.

A typical byproduct of the energy conversion process is heat that can be generated by one or more components within the power conversion system. In conventional power conversion systems, heat from such components radiates into the local air space, such as within the tower of the wind turbine. Because the components of a power conversion system can be in relatively close physical proximity to other components, parts, and assemblies, the heat generated by the power conversion process can cause damage to other components, parts, and assemblies that are associated with power generation. At the same time, excessive heat can damage the power conversion system itself, resulting in component malfunction and/or premature replacement and repair.

Thus, there is a need for systems and methods related to heat transfer in power conversion systems. More specifically, there is a need for systems, methods, and apparatus for cooling a power conversion system.

Certain embodiments of the invention can address some or all of the needs described above. Certain embodiments of the invention are directed to systems, methods, and apparatus for cooling a power conversion system, in particular, a power conversion system in a power generation system. According to one embodiment, a method for cooling a power conversion system can be provided. The method can include providing a heat transfer path for an electrical component in the power conversion system. The electrical component can include a magnetic core and the heat transfer path can be adjacent to a portion of the electrical component. The method can also include electrically isolating the heat transfer path from the electrical component. The method can further include transferring heat from the electrical component using the heat transfer path.

According to another embodiment of the invention, a system for cooling a power conversion system can be provided. The system can include a power conversion system having an electrical component with a magnetic core. The system can also include a heat transfer path adjacent to a portion of the electrical component and electrically isolated from the electrical component. The system can also include a cooling medium. The cooling medium can be used in conjunction with the heat transfer path for transferring heat from the electrical component.

According to yet another embodiment of the invention, an apparatus for cooling a power conversion system can be provided. The apparatus can include a heat transfer path adjacent to a portion of an electrical component in the power conversion system. The electrical component can include a magnetic core and the heat transfer path can be adjacent to a portion of the magnetic core. The apparatus can also include an insulator for electrically isolating the heat transfer path from the electrical component. The apparatus can further include a cooling medium for transferring heat from the electrical component using the heat transfer path.

Other embodiments and aspects of the invention will become apparent from the following description taken in conjunction with the following drawings.

Having thus described the invention in general terms, reference will now be made to the accompanying drawings, which are not necessarily drawn to scale, and wherein:
FIG. 1 illustrates an exemplary system and apparatus for cooling a power conversion system according to one embodiment of the invention.
FIG. 2 illustrates an exemplary apparatus for cooling a power conversion system according to one embodiment of the invention.
FIG. 3 illustrates an exemplary method for cooling a power conversion system according to one embodiment of the invention.

The invention now will be described more fully hereinafter with reference to the accompanying drawings, in which example embodiments of the invention are shown. This invention may, however, be embodied in many different forms and should not be construed as limited to the example embodiments set forth herein; rather, these embodiments are provided so that this disclosure will convey the scope of the invention to those skilled in the art. Like numbers refer to like elements throughout. The term "exemplary" used herein and throughout the specification means example, and is merely intended to indicate an example.

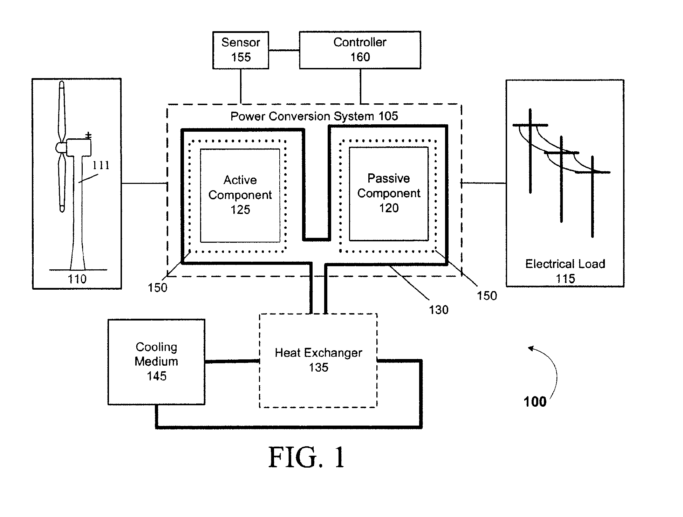

FIG. 1 illustrates an exemplary system 100 and apparatus for cooling a power conversion system according to one embodiment of the invention. Embodiments of the invention can be adapted for any power generation system, whether the system be for conventional, nuclear, or alternative energy type power generation. For ease of illustration, embodiments of the invention are described herein with reference to an alternative energy type power generation system, particularly a wind turbine 110. Although embodiments of the invention are so presented, embodiments of the invention are not limited to wind turbines or alternative energy type power generation systems. Rather, embodiments of the invention can be employed in all types of power conversion systems for all types of power generation systems.

System 100 includes power conversion system 105 coupled to a wind turbine 110 and an electrical load 115. Wind turbine 110 can represent an energy source providing an unregulated, variable form of electrical energy. Power conversion system 105 can be adapted to convert the unregulated, variable form of electrical energy to a relatively stable, non-variable form of electrical energy provided to electrical load 115. In the exemplary embodiment, power conversion system 105 can be co-located with wind turbine 110 inside the tower 111. As part of the power conversion system 105, there can be high frequency switching components for converting the variable form of electrical energy generated by wind turbine 110, which can vary in voltage and/or frequency between about 50 and about 120 hertz in some embodiments, to a relatively non-variable form of electrical energy having a frequency of about 50 or about 60 hertz and a relatively stable voltage, such as about 120 Volts Root-Mean-Square ("RMS"), 480 Volts RMS, 575 Volts RMS, 690 Volts RMS, 1400 Volts RMS, or 2400 Volts RMS to name a few. Because these switching components operate at high frequency, additional electrical components can be used to filter extraneous frequencies from the energy being provided to electrical load 115.

In the exemplary embodiment, any combination of resistors, single or multi-phase inductors, capacitors, and single or multi-phase transformers can be adapted to filter extraneous frequencies from the energy being provided to electrical load 115. Such components can be referred to generally as a passive component 120 because such components consume energy without providing any power gain. In addition to these passive components, one or more active components 125 such as transistors, diodes, and the like can also be used to filter extraneous frequencies. Because power conversion systems associated with power generation systems like wind turbine 105 can convert relatively large amounts of power to be provided to a load 115, relatively large amounts of heat can be dissipated by passive components 120 and/or active components 125. This heat could be the result of relatively large current flows and resistive losses associated with one or more passive components 120 and/or one or more active components 125.

For instance, power conversions system 105 could be adapted to convert electrical power in amounts greater than about 10,000 Watts. In such instances, resistive losses associated with passive components 120 can approach or exceed ten kilowatts and result in undesirable heat effects to the remainder of system 100. In the illustrated embodiment, for example, because power conversion system 105 can be co-located with wind turbine 110 in tower 111, the heat associated with these resistive losses can radiate into tower 111 increasing the temperature of other components also located in tower 111. Increased air temperatures could result in component malfunction and/or premature replacement and repair.

Certain embodiments of the invention can reduce these heat effects in part by providing a heat transfer path 130 for one or more electrical components in power conversion system 105. Heat transfer path 130 can be adapted to remove a substantial portion of the heat generated by one or more electrical components such as passive component 120 and/or active component 125 as part of the power conversion process. In one embodiment, heat transfer path 130 can be coupled to heat exchanger 135, which can be located remotely from power conversion system 105 and/or other components associated with wind turbine 110. In other embodiments, heat exchanger 135 need not be remotely located from power conversion system 105.

Heat exchanger 135 can be associated with dissipating heat provided by heat transfer path 130 and from passive component 120 and/or active component 125 in such a way as to reduce the heating effects described above. In the exemplary embodiment, heat exchanger 135 can be located remotely from power conversion system 105, such as external to tower 111, so that heat being dissipated by heat exchanger 135 is dissipated away from other components associated with wind turbine 110 and/or located within tower 111. Heat exchanger 135 can comprise any heat exchanging component, such as, but not limited to, the following: a radiator component; a fan component; a refrigeration component; and the like.

Heat transfer path 130 can comprise any suitable material for thermal conduction, such as a ceramic material, a composite material, a plastic material, or a metallic material including copper, aluminum, steel, and various alloys having satisfactory thermal conductivity values. In providing a heat transfer path 130 for one or more of electrical components in power conversion system 105, heat transfer path 130 can be adapted to reduce the thermal resistance associated with heat transfer path 130 and the one or more electrical components. In one embodiment, heat transfer path 130 can comprise a thermally conductive structure adjacent to one or more electrical components, such as passive component 120 and active component 125, and positioned such that any air space between heat transfer path 130 and the electrical component is relatively small. In another embodiment, any air space between heat transfer path 130 and the electrical component can be modified with a thermally conductive gas, gel, solid, fabric, or other material to further reduce the associated thermal resistance. In another embodiment, one or more electrical components can be encapsulated with the heat transfer path 130 as part of a thermally isolated space to increase the thermal resistance between the electrical components and other components, and/or decrease the thermal resistance between the electrical components and heat transfer path 130. In another embodiment, a heat sink can be mounted to one or more electrical components and can be positioned in relation to the heat transfer path 130 to further improve thermal conductivity. In still other embodiments, any combination of the above can be used.

Heat transfer path 130, in addition to providing heat transfer qualities, can be electrically isolated from one or more electrical components in power conversion system 105. Electrical isolation from the one or more electrical components can simplify the design and reduce the costs associated with system 100. For instance, in some embodiments described below, a cooling medium 145 can be coupled to heat transfer path 130 and used to transfer heat from one or more electrical components via heat transfer path 130. Electrical isolation of heat transfer path 130 can reduce the need for specially formulated and/or designed cooling mediums. In addition, electrical isolation can reduce the need for additional components associated with the ionization or special filtering of the cooling medium that may allow the cooling medium to operate in electrically charged environments.

Electrical isolation can be provided by one or more electrical insulators 150 mounted to the electrical component and/or the heat transfer path 130. Electrical insulator 150 can comprise any suitable dielectric gas, gel, gel, solid, fabric, or other material for electrically isolating heat transfer path 130 from one or more electrical components such as passive component 120 and active component 125. In some embodiments, electrical insulator 150 can be adapted to be included as part of the physical structure of the electrical component. In other embodiments, electrical insulator 150 can be adapted to provide, in addition to electrical isolation, a reduced thermal resistance between heat transfer path 130 and one or more electrical components. For example, in one embodiment, electrical insulator 150 can include a ceramic material that is both thermally conductive and electrically insulating.

In other embodiments, electrical insulator 150 can be mounted to heat transfer path 130 rather than, or in combination with, being mounted to the electrical component. To further provide electrical isolation, heat transfer path 130 can be configured in relation to one or more axes of one or more electrical components to reduce the excitation of electrical currents in one or more electrically conductive paths associated with heat transfer path 130. In still other embodiments, any combination of the above can be used.

In adapting heat transfer path 130 to remove heat being generated from passive components 120 and/or active components 125, a cooling medium 145 can be coupled to heat transfer path 130. A cooling medium 145 can include any fluid adapted for conducting heat transferred to heat transfer path 130 from one or more electrical components in power conversion system 105 and can be adapted to flow through heat transfer path 130, such as via one or more pumping mechanisms. In one embodiment, cooling medium 145 can comprise water. In another embodiment, cooling medium 145 can comprise ethylene glycol. In another embodiment, cooling medium 145 can comprise water and ethylene glycol while in yet other embodiments, cooling medium 145 can further comprise one or more corrosion inhibitors.

It will be appreciated that in some electrically charged environments it is common for corrosion and/or electrolysis to occur. To reduce incidences of corrosion and/or electrolysis in such environments, it may be desirable in some embodiments of the invention to use common or similar materials among the cooling components of system 100. It may also be desirable to use cooling mediums having one or more corrosion inhibitors. For example, in one embodiment, heat transfer path 130 and heat exchanger 135 can comprise aluminum or other similar metal associated with reducing instances of electroplating. It may further desirable to use a cooling medium 145 comprising ethylene glycol and one or more corrosion inhibitors. Compared to water, ethylene glycol has a relatively low electrical conductivity, meaning that ethylene glycol can improve the electrical isolation of heat transfer path 130 and can reduce incidences of electroplating. Including one or more corrosion inhibitors can further reduce the likelihood of electroplating and/or other corrosive effects, and can thereby improve the operational life of one or more components associated with system 100.

In some embodiments of system 100, it may be desirable to monitor the temperature and/or thermal state of one or more components in power conversion system 105 and to modify the operation of power conversion system 105 accordingly. For example, in the illustrated embodiment, a sensor 155 can be adapted to monitor the thermal state of one or more components in power conversion system 105 and can be coupled to controller 160. Should the thermal state of one or more components in power conversion system 105 stray outside one or more desired constraints, controller 160 can modify the operation of power conversion system 105 to alter the thermal state accordingly.

Sensor 155 can be any sensor, transducer, or probe operable to detect, obtain, or monitor the thermal state of one or more components in power conversion system 105. For example, sensor 155 may be a thermistor-based probe having a resistance that varies with the thermal state of one or more components of power conversion system 105. Sensor 155 can communicate the temperature-based signal corresponding to this resistance to controller 160 and can be in electrical communication with controller 160 for this purpose.

Controller 160 can be adapted to receive the signal from sensor 155 and to use this signal to modify the operation of power conversion system 105. Controller 160 can be implemented using hardware, software, or a combination thereof for performing these functions. By way of example, controller 160 can be a processor, an ASIC, a comparator, a differential module, or other hardware means. Controller 160 can also comprise software or other computer-executable instructions that may be stored in a memory and may be executable by a processor or other processing means.

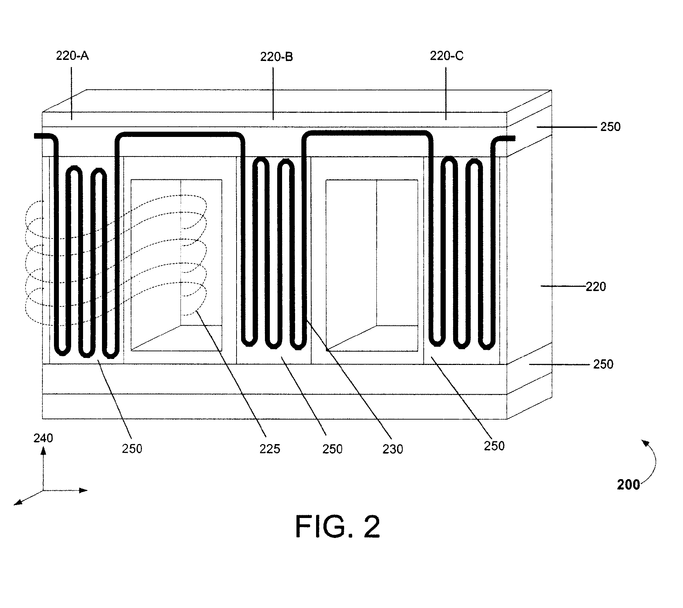

FIG. 2 illustrates portions of an exemplary apparatus 200 for cooling one or more components in a power conversion system 105 according to one embodiment of the invention. Apparatus 200 can include a portion of a passive component such as magnetic core 220. In the exemplary embodiment, magnetic core 220 can be a magnetic core from a three-phase inductor having three legs 220-A, 220-B, and 220-C, and coils (not pictured) associated with each electrical phase wrapped around each respective leg of core 220. Mounted adjacent to each leg of magnetic core 220 can be one or more electrical insulators 250. Electrical insulators 250 can be associated with electrically isolating the heat transfer path 230 from the electrical component comprising magnetic core 220. It will be appreciated that while magnetic core 220 is shown as part of a three phase inductor, embodiments of the invention also can be employed in other electrical components including single phase inductors and/or multi-phase inductors and therefore should not be limited to the exemplary embodiment shown.

Also mounted adjacent to each leg of magnetic core 220 can be aluminum tubes 230. Aluminum tubes 230 can be mounted adjacent to and/or in close proximity to core 220 to reduce the thermal resistance between the magnetic core 220 and the aluminum tubes 230. Aluminum tubes 230 can comprise portions of a heat transfer path for removing a substantial portion of heat being generated by the magnetic core 220 and can be coupled to a cooling medium (not pictured). Although in the exemplary embodiment only three sections of aluminum tubes 230 are shown on only one visible side of magnetic core 220, it will be appreciated that multiple sections of aluminum tubes 230 can be mounted to magnetic core 220 on multiple sides according to other embodiments of the invention. It will also be appreciated that other configurations of magnetic core 220 in relation to aluminum tubes 230 can be used and that embodiments of the invention are not limited to the configurations presented in FIG. 2. It will be further appreciated that while the heat transfer path of FIG. 2 is describe in relation to aluminum tubes 230, the heat transfer path can comprise any suitable material for thermal conduction, such as a ceramic material, a composite material, a plastic material, or a metallic material including copper, aluminum, steel, and various alloys having satisfactory thermal conductivity values.

To improve the electrical isolation of the heat transfer path comprising aluminum tubes 230, aluminum tubes 230 can be oriented in relation to core 220 to reduce the magnetic effects associated with electrical operation of the inductor comprising magnetic core 220. For example, in the illustrated embodiment, coils 225 associated with an inductor comprising magnetic core 220 can be wrapped around the respective legs 220-A, 220-B, and 220-C of core 220 and the aluminum tubes 230, and oriented in a transverse direction to a vertical axis 240 of the magnetic core 220. An additional electrical insulator (not pictured) can be provided between the coils 225 of the inductor and the aluminum tubes 230 to provide electrical isolation between the aluminum tubes 230 and the surrounding coils 225. Furthermore, aluminum tubes 230 can be oriented to reduce the excitation of current in the aluminum skins from the magnetic flux existing within magnetic core 220 when the inductor is in operation. That is, in the exemplary embodiment, aluminum tubes 230 can be oriented in a relatively or substantially parallel direction to vertical axis 240 and can be provided as part of a serpentine path that does not provide a closed loop path transverse to the direction of magnetic flux in the magnetic core 220. In this way, the magnetic flux associated with magnetic core 220 is less likely to excite electrical currents in the conductive skin of aluminum tubes 230. In other embodiments, aluminum tubes 230 can be oriented parallel with the coils 225 and still not provide a closed loop path transverse to the direction of magnetic flux in the magnetic core 220.

It will be appreciated that while in the exemplary embodiment portions of a heat transfer path are illustrated as part of a single layer and can be included as part of the physical structure of an electrical component, the invention is not so limited to the exemplary embodiment. In other embodiments, a heat transfer path can be provided in multiple layers, or interleaved among structural features of an electrical component, and can include additional electrical insulators for providing electrical isolation. In other embodiments, a heat sink can be mounted to the electrical component. In another embodiment, a heat conductive mass, such as an aluminum or copper heat sink, can be adapted with through holes to accommodate the cooling medium. In yet other embodiments, a thermally isolated space can be provided about a portion of the electrical component and/or the heat transfer path for increasing the thermal resistance between the electrical component and other components and/or decreasing the thermal resistance between the electrical components and heat transfer path. In other embodiments, any combination of the above embodiments can be used.

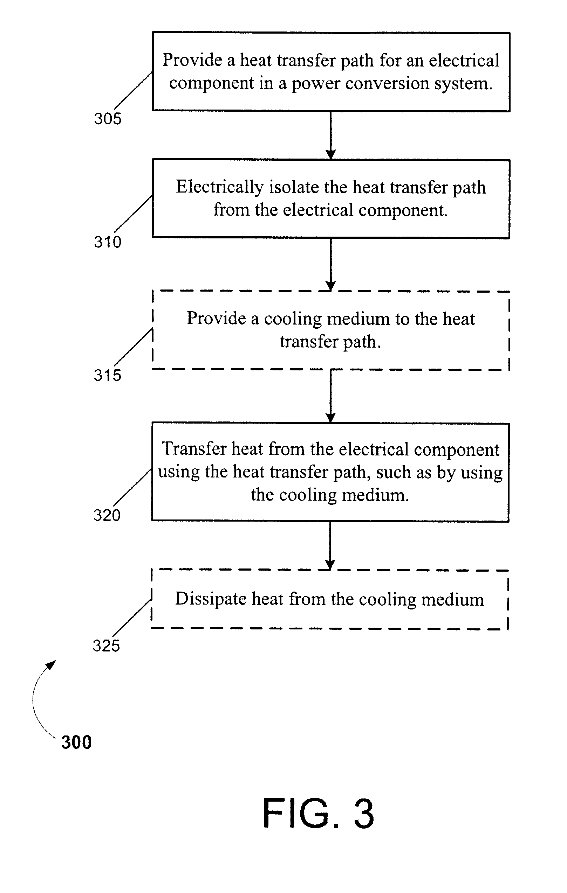

FIG. 3 illustrates an exemplary method 300 for cooling a power conversion system according to one embodiment of the invention. The method 300 can include block 305 where a heat transfer path for an electrical component in a power conversion system is provided. The heat transfer path can comprise any suitable structure for transferring heat from an electrical component. For example, a heat transfer path can include a thermally conductive structure, such as a hollow tube for transferring fluids, and can comprise a ceramic material, a composite material, a plastic material, or a metallic material including copper, aluminum, steel, and/or various alloys. In some embodiments, the thermally conductive structure can be adapted to transfer heat from an electrical component by mounting the heat transfer path adjacent to and/or in close proximity to the electrical component to reduce the air space, and associated thermal resistance, between the heat transfer path and the electrical component. Additionally, in other embodiments the heat transfer path can be further adapted to include one or more thermally conductive gases, gels, solids, fabrics, or other materials to further reduce the associated thermal resistance. In some embodiments, it may be desirable to supplement the heat transfer path with an air cooling structure, such as a fan. In other embodiments, it may be desirable to encapsulate the electrical component and the heat transfer path in a thermally isolated space to reduce any thermal radiation that may otherwise be radiated by the electrical component. Other embodiments may comprise any one or more of the aspects of these exemplary embodiments.

A heat transfer path can be provided for any passive and/or active electrical component in a power conversion system. Such components can include, for example, any combination of resistors, single or multi-phase inductors, capacitors, and single or multi-phase transformers that may be used to filter extraneous frequencies from electrical energy being provided to a load. Active components such as transistors, diodes, and the like can also be provided a heat transfer path in accordance with embodiments of the invention. According to one aspect of the invention, the electrical component can comprise a magnetic core and the heat transfer path can be mounted adjacent to a portion of the electrical component, such as adjacent to the said magnetic core. According to another aspect of the invention, the electrical component can further comprise one or more coils, and the heat transfer path can be mounted adjacent to the magnetic core and the one or more coils.

At block 310, the heat transfer path can be electrically isolated from the electrical path. Electrical isolation can be provided by an electrical insulator, by certain aspects of the heat transfer path, and/or by the cooling medium. An electrical insulator can comprise any suitable dielectric gas, gel, gel, solid, fabric, or other material for electrically isolating the heat transfer path from the electrical component. In some embodiments, an electrical insulator can be mounted to the electrical component and/or to portions of the electrical component. For example, apparatus 200 can include an electrical insulator 250 mounted to the core 220 of the three phase inductor to electrically isolate the heat transfer path 230 from the inductor. In other embodiments, an electrical insulator can be mounted to the heat transfer path but not to the electrical component. In other embodiments, an electrical insulator can be mounted to both the electrical component and the heat transfer path.

Electrical isolation can be enhanced by providing a heat transfer path having a thermally conductive structure that is also electrically non-conductive. In some embodiments, electrical isolation can be further improved with certain orientations of the heat transfer structure and/or by using electrically non-conductive cooling mediums that may also be associated with corrosion prevention and/or electrolysis inhibition. In other embodiments, any combination of the above can be used.

Method 300 can also include block 315 where a cooling medium, such as cooling medium 145 in system 100, can be provided to the heat transfer path. The cooling medium can comprise any suitable medium for transferring heat via the heat transfer path. For example, in one embodiment, the cooling medium can be a fluid comprising ethylene glycol and the heat transfer path can comprise one or more aluminum tubes mounted adjacent to the electrical component. The fluid comprising ethylene glycol can be urged to travel through the aluminum tubes by a pump or other suitable device for transferring fluids. The movement of the ethylene glycol through the one or more aluminum tubes can be associated with transferring heat from the electrical component via the heat transfer path.

At block 325, method 300 can further include dissipating heat from the cooling medium, such as by using one or more heat exchangers. Any suitable heat exchanger can be used to dissipate heat from the cooling medium and can comprise, for example, a radiator and/or fan component. A heat exchanger can also be provided that cools the cooling medium to a predetermined temperature. Cooling the cooling medium and/or dissipating heat from the cooling medium to a predetermined temperature can improve the thermal conductivity and/or performance of certain components such as those components described above in relation to system 100 and the apparatuses described therein.

Accordingly, embodiments of the invention can improve the cooling of one or more components in a power conversion system in part by transferring heat generated by such components using a heat transfer path. In some embodiments, the heat transfer path can be adapted to transfer heat away from the power conversion system as well as any other nearby components that may be associated with the power generation system. Transferring heat away from these components can result in improved cooling and can reduce thermal effects otherwise associated with power conversion. A reduction in thermal effects in a power conversion system is at least one technical effect of various embodiments of the invention.

Transferring heat away from the components in a power generation system using a heat transfer path can also increase the thermal tolerances associated with component design. Increased thermal tolerances in component design can allow for smaller and relatively less expensive components. Furthermore, because embodiments of the invention provide a heat transfer path that is electrically isolated from the one or more electrical components being cooled, embodiments of the invention can reduce the need for filtering and/or ionization components that would otherwise be required, thereby further reducing costs associated with cooling one or more components in a power conversion system. Increased thermal tolerances and reduced costs are additional technical effects of various embodiments of the invention.

Many other modifications and other embodiments of the inventions set forth herein will come to mind to one skilled in the art to which these inventions pertain having the benefit of the teachings presented in the foregoing descriptions and the associated drawings. Thus, it will be appreciated by those of ordinary skill in the art that the invention may be embodied in many forms and should not be limited to the embodiments described above. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

Various aspects and embodiments of the present invention are now defined by the following numbered clauses:
1. A method for cooling a power conversion system, the method comprising:
   providing at least one heat transfer path for at least one electrical component in the power conversion system, wherein the at least one electrical component comprises a magnetic core and the at least one heat transfer path is adjacent to at least a portion of the at least one electrical component;
   electrically isolating the at least one heat transfer path from the at least one electrical component; and
   transferring heat from the at least one electrical component using the at least one heat transfer path.
2. The method of clause 1, further comprising:
   providing a cooling medium to the at least one heat transfer path; and
   wherein providing at least one heat transfer path comprises providing at least one heat transfer path for at least one of the following: an inductor, a transformer, a capacitor, or a resistor.
3. The method any preceding clause, wherein the cooling medium comprises at least one of the following: water or ethylene glycol.
4. The method of any preceding clause, wherein the at least one electrical component comprises at least one coil and wherein electrically isolating the at least one heat transfer path from the at least one electrical component comprises:
   mounting a first insulator between the at least one heat transfer path and the magnetic core, wherein the at least one heat transfer path is electrically isolated from the magnetic core by a portion of the first insulator; and
   mounting a second insulator between the at least one heat transfer path and the at least one coil, wherein the at least one heat transfer path is electrically isolated from the at least one coil by a portion of the second insulator.
5. The method of any preceding clause, wherein the at least one heat transfer path comprises at least one serpentine path oriented parallel to a vertical axis of the magnetic core.
6. The method of any preceding clause, further comprising:
   dissipating heat from the cooling medium.
7. The method of any preceding clause, wherein dissipating heat from the cooling medium comprises:
   dissipating heat from the cooling medium via at least one of the following: a radiator component or a fan component.
8. The method of any preceding clause, further comprising:
   mounting at least one heat sink to the at least one electrical component, wherein the at least one heat transfer path is adjacent to at least a portion of the at least one heat sink.
9. The method of any preceding clause, further comprising:
   cooling the cooling medium to a predetermined temperature.
10. The method of any preceding clause, further comprising:
   monitoring a temperature associated with the at least one electrical component; and
   modifying operation of the at least one electrical component when the temperature exceeds a threshold temperature.
11. A system comprising:
   a power conversion system comprising at least one electrical component comprising a magnetic core;
   at least one heat transfer path adjacent to at least a portion of the at least one electrical component, wherein the at least one heat transfer path is electrically isolated from the at least one electrical component; and
   at least one cooling medium operable to transfer heat from the at least one electrical component, wherein heat from the at least one electrical component is transferred using the at least one heat transfer path.
12. The system of any preceding clause, wherein the at least one cooling medium comprises at least one of the following: water or ethylene glycol.
13. The system of any preceding clause, wherein the at least one electrical component comprises at least one of the following: an inductor, a transformer, a capacitor, or a resistor.
14. The system of any preceding clause, wherein the at least one electrical component further comprises at least one coil, the system comprising:
   a first insulator mounted to the magnetic core for electrically isolating the at least one heat transfer path from the magnetic core; and
   a second insulator mounted to the at least one coil for electrically isolating the at least one heat transfer path from the at least one coil.
15. The system of any preceding clause further comprising:
   at least one heat exchanger coupled to the at least one heat transfer path for dissipating heat from the at least one cooling medium.
16. The system of any preceding clause, wherein the at least one heat exchanger comprises at least one of the following: a radiator component or a fan component.
17. The system of any preceding clause, further comprising:
   at least one heat sink mounted to the at least one electrical component and adjacent to at least a portion of the at least one heat transfer path.
18. The system of any preceding clause comprising:
   at least one sensor for monitoring a temperature associated with the at least one electrical component; and
   at least one controller operable to modify the operation of the at least one electrical component when the temperature exceeds a threshold temperature.
19. An apparatus comprising:
   at least one heat transfer path adjacent to at least a portion of an electrical component in a power conversion system, wherein the at least one electrical component comprises a magnetic core and the at least one heat transfer path is adjacent to at least a portion of the magnetic core;
   at least one insulator for electrically isolating the at least one heat transfer path from the at least one electrical component; and
   at least one cooling medium operable to transfer heat from the at least one electrical component, wherein heat from the at least one electrical component is transferred using the at least one heat transfer path.
20. The apparatus of any preceding clause, further comprising:
   at least one heat exchanger coupled to the at least one heat transfer path for dissipating heat from the at least one cooling medium.

## Claims

1. A method (300) for cooling a power conversion system, the method comprising:
providing (305) at least one heat transfer path for at least one electrical component in the power conversion system, wherein the at least one electrical component comprises a magnetic core and the at least one heat transfer path is adjacent to at least a portion of the at least one electrical component;
electrically isolating (310) the at least one heat transfer path from the at least one electrical component; and
transferring (320) heat from the at least one electrical component using the at least one heat transfer path.

2. A system (100) comprising:
a power conversion system (105) comprising at least one electrical component comprising a magnetic core (120);
at least one heat transfer path (130) adjacent to at least a portion of the at least one electrical component (120), wherein the at least one heat transfer path (130) is electrically isolated from the at least one electrical component (120); and
at least one cooling medium (145) operable to transfer heat from the at least one electrical component (120), wherein heat from the at least one electrical component (120) is transferred using the at least one heat transfer path (130).

3. The system (100) of claim 2, wherein the at least one cooling medium (145) comprises at least one of the following: water or ethylene glycol.

4. The system (100) of claim 2 or claim 3, wherein the at least one electrical component (120) comprises at least one of the following: an inductor, a transformer, a capacitor, or a resistor.

5. The system (100) of any of claims 2 to 4, wherein the at least one electrical component (120) further comprises at least one coil, the system comprising:
a first insulator (150) mounted to the magnetic core for electrically isolating the at least one heat transfer path (130) from the magnetic core; and
a second insulator mounted to the at least one coil for electrically isolating the at least one heat transfer path (130) from the at least one coil.

6. The system (100) of any of claims 2 to 5 further comprising:
at least one heat exchanger (135) coupled to the at least one heat transfer path (130) for dissipating heat from the at least one cooling medium (145).

7. The system (100) of claim 6, wherein the at least one heat exchanger (135) comprises at least one of the following: a radiator component or a fan component.

8. The system (100) of any of claims 2 to 7, further comprising:
at least one heat sink mounted to the at least one electrical component (120) and adjacent to at least a portion of the at least one heat transfer path (130).

9. The system (130) of any of claims 2 to 8 comprising:
at least one sensor (155) for monitoring a temperature associated with the at least one electrical component (120); and
at least one controller (160) operable to modify the operation of the at least one electrical component (120) when the temperature exceeds a threshold temperature.

10. An apparatus (200) comprising:
at least one heat transfer path (230) adjacent to at least a portion of an electrical component (220) in a power conversion system, wherein the at least one electrical component comprises a magnetic core and the at least one heat transfer path (230) is adjacent to at least a portion of the magnetic core;
at least one insulator (250) for electrically isolating the at least one heat transfer path (230) from the at least one electrical component (220); and
at least one cooling medium operable to transfer heat from the at least one electrical component (220), wherein heat from the at least one electrical component (220) is transferred using the at least one heat transfer path (230).
